(19) Europäisches Patentamt
European Patent Office
Office européen des brevets

(11) Veröffentlichungsnummer : **0 233 362**
**B1**

(12) **EUROPÄISCHE PATENTSCHRIFT**

(45) Veröffentlichungstag der Patentschrift :
17.08.88

(51) Int. Cl.⁴ : **B 60 K 11/08**, B 60 R 13/08,
F 02 B 29/04

(21) Anmeldenummer : 86117720.2

(22) Anmeldetag : 19.12.86

(54) **Kraftfahrzeug mit gekapselter Brennkraftmaschine.**

(30) Priorität : 21.12.85 DE 3545650

(43) Veröffentlichungstag der Anmeldung :
26.08.87 Patentblatt 87/35

(45) Bekanntmachung des Hinweises auf die Patenterteilung : 17.08.88 Patentblatt 88/33

(84) Benannte Vertragsstaaten :
AT DE FR GB SE

(56) Entgegenhaltungen :
DE-A- 2 340 497
DE-A- 2 912 386
M.T.Z. MOTORTECHNISCHE ZEITSCHRIFT, Band 43,
Nr. 5, Mai 1982, Seiten 201-205, Schwäbisch Gmünd;
H. DORSCH "Ladeluftkühlung bei aufgeladenen Per-
sonenwagen-Ottomotoren"

(73) Patentinhaber : AUDI AG
Postfach 220
D-8070 Ingolstadt (DE)

(72) Erfinder : Bauder, Richard, Dipl.-Ing.
Fellbacher Weg 12
D-7107 Neckarsulm (DE)

(74) Vertreter : Speidel, Eberhardt
Postfach 1320 Waldpromenade 26
D-8035 Gauting (DE)

## Beschreibung

Die Erfindung bezieht sich auf ein Kraftfahrzeug gemäß dem Oberbegriff des Patentanspruchs.

Bei einer bekannten gekapselten Brennkraftmaschine mit Abgasturbolader und Ladeluftkühler (DE-OS-28 11 684) ist der Ladeluftkühler innerhalb der Kapsel angeordnet und durch ein vom Abgasturbolader angetriebenes Gebläse zwangsbelüftet. Diese bekannte Ausführung erfordert eine große Motorkapsel, die im Motorraum eines Kraftfahrzeuges nicht unterzubringen ist, und sie ist überdies durch die Notwendigkeit eines Gebläses für den Ladeluftkühler kostenintensiv. Bei Kraftfahrzeugen mit nicht gekapselter Brennkraftmaschine wird der Ladeluftkühler allgemein so angeordnet, daß er vom Fahrtwind durchströmt wird, so daß sich ein eigenes Gebläse erübrigt. Wenn jedoch eine gekapselte Brennkraftmaschine verwendet werden soll, so ergeben sich infolge der beengten Platzverhältnisse im Motorraum erhebliche Schwierigkeiten, den Ladeluftkühler so anzuordnen, daß eine ausreichende Durchströmung durch den Fahrtwind stattfindet.

Der Erfindung liegt die Aufgabe zugrunde, bei einem Kraftfahrzeug der im Oberbegriff des Patentanspruchs angegebenen Art den Ladeluftkühler so anzuordnen, daß eine ausreichende Durchströmung von Kühlluft ohne Verwendung eines Gebläses ermöglicht ist.

Diese Aufgabe wird erfindungsgemäß dadurch gelöst, daß der Ladeluftkühler im Fahrtluftstrom liegend in die Wand der Kapsel integriert und von Klappen abdeckbar ist, die vom Staudruck des Fahrtwindes und/oder thermostatisch in Abhängigkeit von der Temperatur in der Kapsel geöffnet werden.

Durch die Anordnung des Ladeluftkühler in der Wand der Kapsel kann der Fahrtwind den Ladeluftkühler ungehindert durchströmen. Es ist außerdem der Raumbedarf des Ladeluftkühlers gegenüber einer getrennten Anordnung erheblich verringert. Durch die Anordnung der sich erst durch den Staudruck des Fahrtwindes öffnenden Klappen wird bei stillstehendem oder mit geringer Geschwindigkeit fahrendendem Fahrzeug die Wirkung einer Vollkapselung erzielt, sodaß eine optimale Geräuschdämpfung in diesen Betriebsbereichen erreicht wird. Um jedoch beispielsweise bei Bergfahrten und entsprechend erhöhtem Leistungsbedarf trotz niedriger Geschwindigkeit eine ausreichende Durchströmung des Ladeluftkühlers zu erreichen, können die Klappen in Abhängigkeit von der Temperatur in der Kapsel thermostatisch geöffnet werden.

Der Anstieg der Temperatur in der Kapsel durch die den Ladeluftkühler durchströmenden Luft ist nicht bedeutend, zumal normalerweise noch die üblichen Be- und Entlüftungsöffnungen in der Kapselwand vorgesehen werden.

Ein Ausführungsbeispiel der Erfindung wird im folgenden unter Bezugnahme auf die Zeichnungen beschrieben. Es zeigt :

Fig. 1 einen Längsschnitt des Vorderteils eines Kraftfahrzeuges in schematischer Darstellung,

Fig. 2 eine Draufsicht des Motorraumes des Kraftfahrzeuges von Fig. 1, und

Fig. 3 eine Einzelheit.

Eine Brennkraftmaschine 1 ist innerhalb einer schalldämmenden Kapsel 2 im Motorraum 3 eines Kraftfahrzeuges angeordnet. Die Brennkraftmaschine 1 ist mit einem Abgasturbolader 4 versehen, dessen Ladergebläse einerseits über ein Luftfilter 5 und ein die Vorderwand 6 der Kapsel 2 durchdringendes Ansaugrohr 7 mit der Atmosphäre und andererseits durch eine Leitung 8 mit einem Ladeluftkühler 9 verbunden ist, der in die vordere Stirnwand 6 der Kapsel 2 integriert ist. Der Ladeluftkühler 9 ist andererseits durch eine Leitung 10 mit dem Einlaßsystem der Brennkraftmaschine 1 verbunden. Von der Turbine des Abgasturboladers 4 geht eine Auspuffleitung 11 aus, die sich durch eine Öffnung 12 in der Kapsel 2 erstreckt. Der Ladeluftkühler 9 liegt in dem durch die Pfeile 13 angedeuteten Fahrtluftstrom, wird also vom Fahrtwind durchströmt. Aus der Kapsel 2 kann die Luft durch die Öffnung 12, deren Durchmesser größer ist als der Durchmesser der Auspuffleitung 11, abströmen.

Der Ladeluftkühler 9 ist auf seiner Rückseite von schwenkbaren Klappen 14 abgedeckt, die bei fahrendem Fahrzeug durch den Staudruck weggeschwenkt werden, jedoch bei stillstehendem Fahrzeug sowie bei langsamer Fahrt mehr oder weniger geschlossen sind, sodaß die schalldämmende Wirkung der Kapsel 2 durch den Ladeluftkühler 9 in diesen Betriebsbereichen des Fahrzeuges nicht beeinträchtigt wird. Bei höheren Fahrgeschwindigkeiten tritt das Verbrennungsgeräusch gegenüber den Abroll- und Windgeräuschen zurück, sodaß das Öffnen der Klappen 14 keine erhöhte Geräuschbelästigung der Umwelt zur Folge hat.

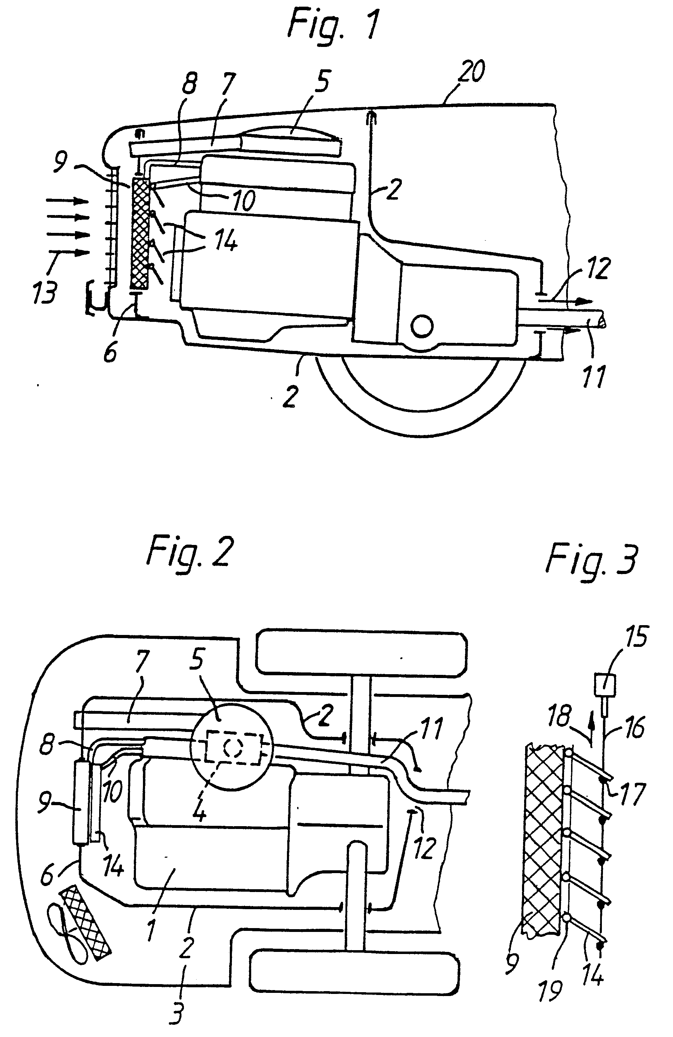

Um bei hoher Belastung und niedriger Fahrgeschwindigkeit, beispielsweise beim Bergfahren, eine ausreichende Durchströmung des Ladeluftkühlers 9 zu erreichen, können die Klappen 14, wie in Fig. 3 angedeutet, durch einen Thermostaten 15, der beispielsweise auf die Temperatur innerhalb der Kapsel 2 anspricht, in die Offenstellung geschwenkt werden. Zu diesem Zweck ist mit dem beweglichen Element des Thermostaten 15 ein Gestänge 16 verbunden, das Anschläge 17 für die Klappen 14 aufweist und bei einer Verschiebung in Richtung des Pfeiles 18 die Klappen 14 öffnet. Die Anschläge 17 behindern, wie ersichtlich, das Öffnen der Klappen 14 durch den Staudruck nicht.

Die Klappen 14 können aus einem starren Material bestehen, in welchem Falle sie bei 19 scharnierartig am Ladeluftkühler 9 angelenkt sind, oder sie können von Gummilappen gebildet werden.

Zur zusätzlichen Belüftung des Innenraumes der Kapsel 2 können übliche, nicht dargestellte Lufteintritts- und -austrittsöffnungen in der Wand der Kapsel 2 vorgesehen sein. Die Kapsel 2 ist, wie üblich, nach oben zu offen und wird durch die Motorhaube 20 geschlossen.

## Patentanspruch

Kraftfahrzeug mit einer in einer schalldämmenden Kapsel angeordneten Brennkraftmaschine mit Abgastubolader und Ladeluftkühler, dadurch gekennzeichnet, daß der Ladeluftkühler (9) im Fahrtluftstrom (13) liegend in der Wand (6) der Kapsel (2) integriert und von Klappen (14) abdeckbar ist, die vom Staudruck des Fahrtwindes und-/oder thermostatisch in Abhängigkeit von der Temperatur in der Kapsel (2) geöffnet werden.

## Claim

Motor vehicle with a combustion engine with exhaustgas driven turbocharger and intercooler located in a noise-insulating enclosure, characterised in that the intercooler (9) is positioned in the airstream (13) and integrated in the outer wall (6) of the enclosure (2), and can be closed off by flaps (14) which are opened by the dynamic pressure of the airstream and/or thermostatically according to the temperature in the enclosure (2).

## Revendication

Véhicule automobile avec moteur à combustion interne monté dans un blindage insonorisant et comprenant un turbocompresseur à gaz d'échappement et un radiateur d'air de suralimentation, caractérisé par ce que le radiateur d'air de suralimentation (9) est intégré dans la paroi (6) du blindage (2) de manière à être exposé au flux du vent dynamique (13) et qu'il peut être masqué par des clapets (14) qui s'ouvrent sous l'action de la pression dynamique du vent relatif et/ou d'un thermostat commandé en fonction de la température régnant à l'intérieur du blindage (2).

# Fig. 1

# Fig. 2

# Fig. 3